Europäisches Patentamt

**European Patent Office**

**Office européen des brevets**

(11) Numéro de publication: **0 186 571**
**B1**

## FASCICULE DE BREVET EUROPÉEN

(45) Date de publication du fascicule du brevet:
04.11.87

(51) Int. Cl.⁴: **B 60 Q 1/10**

(21) Numéro de dépôt: **85402451.0**

(22) Date de dépôt: **10.12.85**

(54) **Correcteur automatique de l'orientation des projecteurs lors de variations d'assiette d'un véhicule.**

(30) Priorité: **14.12.84 FR 8419172**

(43) Date de publication de la demande:
**02.07.86 Bulletin 86/27**

(45) Mention de la délivrance du brevet:
**04.11.87 Bulletin 87/45**

(84) Etats contractants désignés:
**DE FR GB IT SE**

(56) Documents cité:
**FR-A-2 217 944**

(73) Titulaire: **CIBIE PROJECTEURS, 17, rue Henri Gautier, F-93012 Bobigny Cédex (FR)**

(72) Inventeur: **Cibie, Pierre, 145, avenue du Roule, F-92200 Neuilly sur Seine (FR)**

(74) Mandataire: **Martin, Jean- Jacques, Cabinet REGIMBEAU 26, Avenue Kléber, F-75116 Paris (FR)**

LIBER, STOCKHOLM 1987

EP 0 186 571 B1

**0 186 571**

## Description

La présente invention concerne un dispositif destiné à corriger auromatiquement l'orientation des projecteurs d'un véhicule, lorsque celle-ci a été modifiée, par suite d'un changement d'assiette.

On sait que les projecteurs d'un véhicule sont réglés sur la chaîne de montage, pour qu'ils éclairent efficacement la route sans éblouir les autres usagers, conformément au code de la route. Dans la pratique, la coupure du faisceau code est rabattue de façon à toucher le sol à une distance du véhicule comprise entre 50 et 75 mètres.

Mais, lorsque l'on charge le véhicule, que l'on accélère ou décélère, l'assiette varie et l'orientation des projecteurs par rapport à la route est de ce fait modifiée: la coupure est soit relevée et les projecteurs éblouissent, soit rabattue et ils n'éclairent pas assez loin.

On utilise depuis longtemps sur certains modèles de voitures, des dispositifs de réglage hydrauliques ou électriques capables d'effectuer aussi bien la correction statique des projecteurs que leur correction dynamique. Ces dispositifs comprennent généralement deux capteurs qui enregistrent en permanence les distances entre la caisse et les roues avant et arrièvе du véhicule, un calculateur qui élabore un signal qui est fonction de la différence desdites distances, et un actuateur commandé par ledit signal pour réorienter les projecteurs vers une nouvelle position pour laquelle le faisceau lumineux est envoyé dans la direction correspondant au réglage correct par rapport à la route.

Toutefois, ces dispositifs de réglage sont compliqués, encombrants et difficiles à installer; il faut en effet prévoir un espace important pour l'implantation des deux capteurs, de l'actuateur et des canalisations hydrauliques ou des conducteurs électriques qui relient ces derniers. De plus, tous ces éléments alourdissent la voiture et en majorent le prix de revient.

On peut citer également, à titre purement documentaire, le brevet français n° 1 455 408 au nom de la Demanderesse, qui enseigne un dispositif pour corriger l'orientation des projecteurs d'un véhicule par asservissement sur le site des projecteurs des véhicules venant en sens inverse. La correction a pour but d'adapter l'orientation des projecteurs au profil de la route (montées, descentes, etc...) à chaque fois qu'un véhicule arrive en face, pour ne pas éblouir son conducteur, et non pas pour compenser les variations d'assiette du véhicule sur lequel le dispositif est monté.

La présente invention a pour but de remédier à ces inconvénients en proposant un dispositif de correction de l'orientation d'un projecteur d'un véhicule, qui soit de structure simple et d'encombrement pratiquement nul.

Le dispositif correcteur selon l'invention est caractérisé en ce qu'il comprend:

- un capteur d'éclairement intégré au projecteur du véhicule et solidaire en mouvement de ce dernier, le capteur étant agencé pour détecter la luminance de la route selon au moins une direction faisant un angle prédéterminé avec l'horizontale, en une région de la route située dans le champ d'éclairement du projecteur, et pour engendrer un signal représentatif de ladite luminance,

- un actuateur apte à faire varier l'inclinaison de l'ensemble projecteur-capteur par rapport au véhicule, et

- des moyens de traitement aptes à élaborer un signal de commande de l'actuateur à partir du signal engendré par le capteur, de manière à asservir ladite région de la route en luminance constante.

Ainsi, lorsque le projecteur est orienté correctement, le signal de commande élaboré par les moyens de traitement est inopérant, de sorte que l'actuateur reste à l'arrêt et que l'orientation du projecteur est inchangée.

Par contre, si par suite d'un freinage, l'assiette du véhicule varie pour devenir plongeante, le faisceau code va éclairer la route en une région plus rapprochée du véhicule. La direction dans laquelle s'effectue la détection de la luminance variant comme la direction du faisceau considéré, la région dont la luminance est détectée est donc également rapprochée. Mais étant donné que la luminance d'un point de la route varie comme le carré de la distance de la source lumineuse à ce point, la luminance qui sera détectée par le capteur en cette nouvelle région sera supérieure à la luminance initiale. Le signal fourni par le capteur va donc varier, dans ce cas augmenter. La variation du signal par rapport à sa valeur initiale est déterminée par les moyens de traitement et un signal de commande correspondant est appliqué à l'actuateur, lequel fait pivoter le projecteur, ou éventuellement seulement le réflecteur de celui-ci, d'un angle tel que le faisceau soit ramené dans la direction d'origine par rapport à la route.

Un raisonnement analogue peut être fait dans le cas d'un changement d'assiette par suite d'accélération du véhicule. Le faisceau est relevé, et le correcteur automatique intervient pour le rabaisser jusqu'à sa direction initiale.

Dans ce qui précède, on a pu assimiler les variations de luminance sur un point ou région de la route à des variations d'éclairement sur des plans verticaux, parce qu'il est connu que ces deux quantités varient dans le même rapport.

Ainsi, le dispositif selon l'invention est entièrement intégré à l'intérieur du projecteur. Il n'utilise aucun circuit électrique ou hydraulique extérieur. Le projecteur est lui-même à orientation asservie, en fonction de la variation de la luminance que le capteur détecte dans une direction prédéterminée fixe par rapport au projecteur. Ce correcteur est donc léger, d'encombrement réduit, économique et ne nécessite pratiquement aucun entretien.

Dans un mode de réalisation particulier de l'invention, le capteur est constitué par un objectif, tel qu'une lentille convergente, et par au moins une cellule photo-électrique montée dans le plan focal image de ladite lentille au point image de ladite région dont la luminance est à détecter, l'ensemble de la lentille convergente et de la cellule photo-électrique étant lié en mouvement avec le réflecteur. Dans la plupart des modèles de voitures en effet, le projecteur proprement dit est fixe par rapport à la carrosserie et c'est le réflecteur qui est mobile.

Mais le dispositif correcteur a une seule cellule photoélectrique n'est pas d'un fonctionnement entièrement satisfaisant. On conçoit en effet que même si l'assiette de la voiture ne change pas, la luminance détectée au point ou région considéré peut subir des fluctuations dues à différents paramètres, tels que la variation du coefficient de réflexion de la route, due par exemple à la présence de tâches colorées ou de flaques d'eau, ou encore la variation de l'intensité du projecteur. Ainsi, si la tension d'alimentation des lampes croît, la luminance détectée augmente. Le correcteur, interprétant cet accroissement comme s'il était provoqué par un changement d'assiette de la voiture, commande le relèvement du faisceau jusqu'à une orientation telle qu'il risque d'être éblouissant.

Pour éliminer l'influence des paramètres instantanés et locaux sur la luminance détectée, le capteur comprend une deuxième cellule photo-électrique située dans le plan focal de l'objectif, de manière que celui-ci forme sur elle l'image de la route selon une direction faisant un second angle prédéterminé avec l'horizontale, correspondant à une seconde région de la route nettement plus rapprochée du véhicule que la première région susmentionnée.

Les moyens de traitement déterminent dans ce cas le rapport des luminances dans les deux directions choisies. Ce rapport est indépendant de la luminosité inhérente de la route et de la tension d'alimentation des lampes.

Les moyens de traitement peuvent être de tout type connu, par exemple de type électronique ou à microprocesseur. Dans une forme de réalisation particulière, ils sont constitués par un pont de Wheatstone dont deux branches adjacentes sont constituées par les résistances variables, et choisies initialement égales, de deux cellules photo-électriques de type passif, et dont les deux autres branches sont constituées par deux résistances fixes choisies pour que, lorsque le projecteur est dans son orientation correcte, le pont de Wheatstone soit équilibré, la tension recueillie aux bornes de la diagonale de mesure du point de Wheatstone étant appliquée à l'entrée d'un amplificateur, et l'actuateur étant branché à la sortie de ce dernier.

En cas de changement d'assiette de la voiture, le rapport des éclairements enregistrés par les cellules photo-électriques, et donc le rapport des résistances de ces dernières, varient. Il en résulte que le pont se déséquilibre: aux bornes de la diagonale mesure du pont prend naissance une tension électrique qui, après amplification, commande l'actuateur, lequel ramène le projecteur dans l'orientation correcte.

On a envisagé dans ce qui précède, un dispositif de correction associé à un seul projecteur. Mais, étant éonné que la luminance de la route dépend des deux projecteurs du véhicule, il est nécessaire de commander simultanément la ré-orientation de chacun d'eux. On pourra à cet effet utiliser deux actuateurs tels que deux moteurs pas à pas indépendants. Si l'on utilise des moteurs à courant continu, l'un d'eux pourra être commandé à la fois par le pont de Wheatstone et par un comparateur susceptible de délivrer une tension électrique qui est fonction du décalage angulaire de la position du second projecteur par rapport au premier projecteur. Ce comparateur peut être constitué par deux potentiomètres montés en pont de Wheatstone, et dont les curseurs sont solidaires en rotation avec les réflecteurs des projecteurs, lesdits curseurs des potentiomètres étant reliés aux bornes d'entrée d'un amplificateur dont la sortie est appliquée au moteur associé au second projecteur.

La détermination de la valeur de référence du rapport des luminances dans les deux directions prédéterminées choisies sera avantageusement effectuée après avoir équilibré, de façon manuelle ou automatique, les deux projecteurs l'un par rapport à l'autre grâce au circuit comparateur ci-dessus, le correcteur automatique étant hors-circuit pendant cette opération.

Le correcteur à deux cellules photo-électriques ci-dessus décrit peut présenter un inconvénient; si un obstacle fortuit se présente sur la route dans la direction angulaire de détection correspondant à la région la plus éloignée de la route, il donne à cette région une luminance plus élevée. Le rapport des éclairements dans les deux directions angulaires choisies augmente alors brusquement, entraînant avec le dispositif ci-dessus un relèvement intempestif des projecteurs.

Pour remédier à cet inconvénient, il faut rendre le correcteur insensible aux variations accidentelles de la luminance. Or, un calcul, qui sera donné en détail par la suite, montre que la sensibilité d'un capteur est d'autant plus grande, pour une variations donnée de l'angle de l'assiette, que la région de la route dont la luminance est détectée est éloignée. Ainsi, dans la première direction choisie qui correspond à la région la plus éloignée de la route, la sensibilité est particulièrement élevée, ce qui va dans le sens de l'inconvénient que l'on vient de signaler.

D'où l'idée, selon l'invention, de mesurer la luminance dans une direction intermédiaire entre les deux directions précédemment mentionnées, et qui correspond à une région de la route située entre la région la plus éloignée et la région la plus rapprochée. Pour une même variation de l'angle de l'assiette, la variation de la luminance sera plus faible en cette région intermédiaire qu'en la région la plus éloignée. On ne peut cependant pas se contenter de mesurer la luminance uniquement en cette région intermédiaire, précisément parce que la sensibilité y est plus faible. En effet, sur une route normale, où il ne se présente pas d'obstacle, il est au contraire souhaitable d'avoir une grande sensibilité.

Par conséquent, selon un mode de réalisation perfectionné de l'invention, le dispositif correcteur d'orientation comportera une troisième cellule photoélectrique également montée dans le plan focal de l'objectif en un emplacement correspondant à l'image de la route dans une troisième direction faisant un angle prédéterminé avec l'horizontale, correspondant à ladite région intermédiaire.

Les moyens de traitement devront donc prendre en considération la mesure de la luminance de ladite région intermédiaire. On pourra dans ce cas également utiliser des moyens de traitement de type à microprocesseur ou électriques, par exemple le circuit envisagé plus haut et convenablement complété. Pour cela, le point de jonction des deux premières cellules photo-électriques est relié, par l'intermédiaire d'une ligne de liaison comprenant un relais, au point de jonction de la troisième cellule photo-électrique et d'une troisième résistance dont le comportement est sensiblement identique à celui de la résistance de la seconde cellule, dont les autres extrémités sont respectivement reliées aux bornes de la diagonale d'alimentation du pont de Wheatstone, ledit relais commandant l'ouverture d'un interrupteur associé inclus dans un circuit électrique comprenant en série le ou les actuateur(s) et les bornes de sortie de l'amplificateur, dès qu'un courant circule dans ladite ligne de liaison du premier vers le second des points de jonction susmentionnés, une diode étant montée en série dans ladite ligne de liaison de manière à s'opposer au passage du courant dans le sens inverse, la résistance de la cellule associée à la région la plus éloignée étant choisie plus grande que celle de la cellule associée à la région rapprochée.

En effet, en fonction du rabattement angulaire, le rapport des luminances aux régions éloignée et rapprochée varie suivant une loi donnée, et le rapport des luminances aux régions intermédiaire et rapprochée varie suivant une autre loi. Comme on en fera le calcul détaillé par la suite, le premier rapport est supérieur au second rapport et égal à un multiple de celui-ci. Cette relation entre les deux rapports permet donc de prévoir, à partir de la connaissance du second rapport, ce que doit être normalement la valeur du premier rapport, et donc la valeur de la luminance de la région la plus éloignée. Dès que les moyens de traitement auront détecté que le coefficient normal entre les deux rapports a été dépassé, cela signifiera qu'un obstacle s'est présenté en ladite région éloignée, devenue très lumineuse. Le courant qui circule dans la ligne de liaison mentionnée plus haut est alors suffisamment intense pour que le relais provoque l'ouverture de son interrupteur, et donc la mise hors-service des actuateurs: aucune correction de l'orientation des projecteurs ne sera effectuée. Si, par contre, le coefficient des rapports des luminances reste égal ou inférieur à la valeur normale susmentionnée, ledit circuit électrique reste fermé et les actuateurs seront normalement commandés par la tension de sortie de l'amplificateur.

Selon un mode de réalisation avantageux de l'invention, les trois cellules photo-électriques sont en forme de bandes allongées horizontales et parallèles, coïncidant avec les images respectives que la lentille donne de trois régions en forme de bandes transversales de route, de largeurs égales à la voie suivie par le véhicule, correspondant respectivement aux trois directions prédéterminées susmentionnées, lesdites cellules ayant des largeurs différentes qui reproduisent la perspective de la route.

Des modes de réalisation de l'invention vont être décrits ci-dessous à titre d'exemple non limitatif, en regard des dessins annexés dans lesquels:

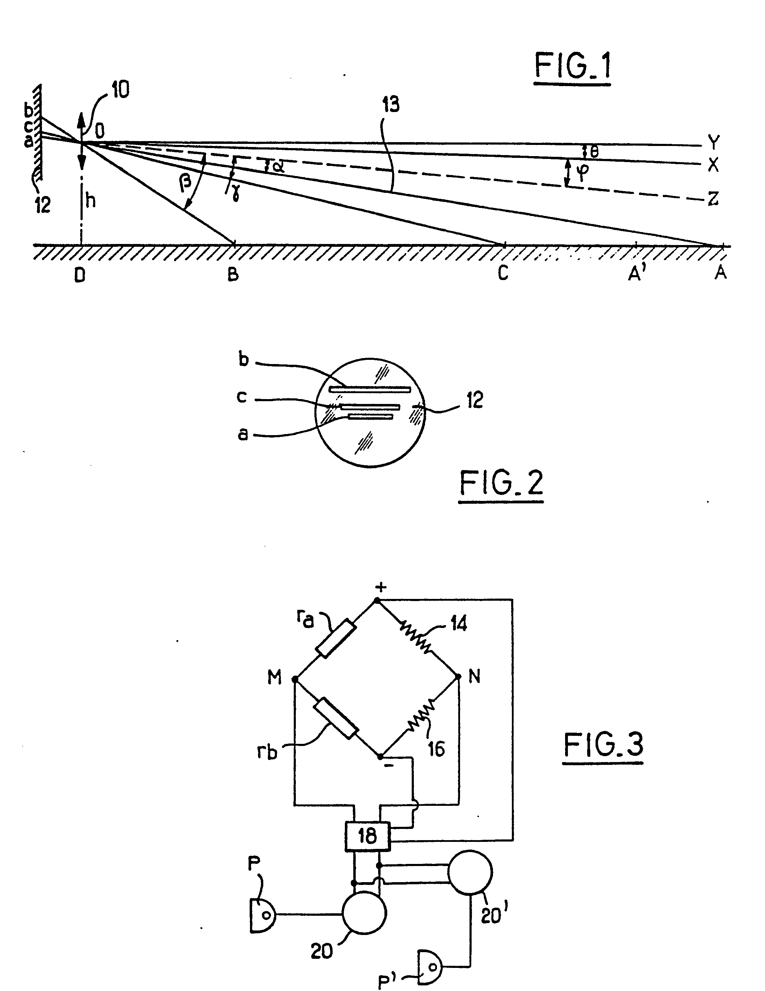

. La Figure 1 montre le schéma optique d'un dispositif correcteur intégré à un projecteur et utilisant trois cellules photo-électriques;

. La Figure 2 est une vue de face du réflecteur du projecteur;

. La Figure 3 est un schéma d'un circuit électrique associé à un dispositif correcteur ne comportant que deux cellules photo-électriques;

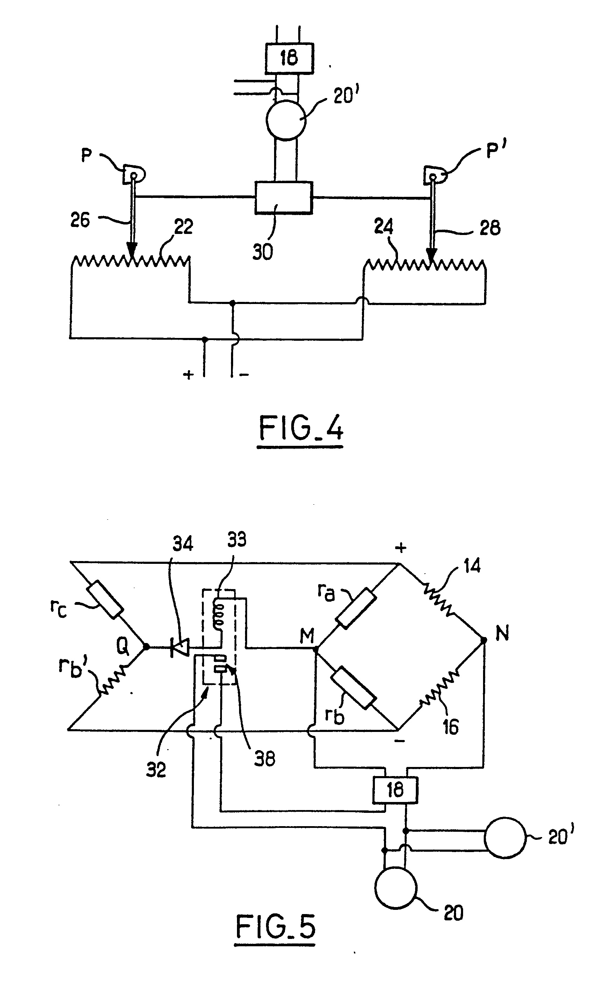

. La Figure 4 est le schéma du comparateur de l'orientation d'un réflecteur par rapport à l'autre réflecteur;

. La Figure 5 est le schéma électrique du dispositif dans le cas où le correcteur comporte trois cellules photo-électriques; et

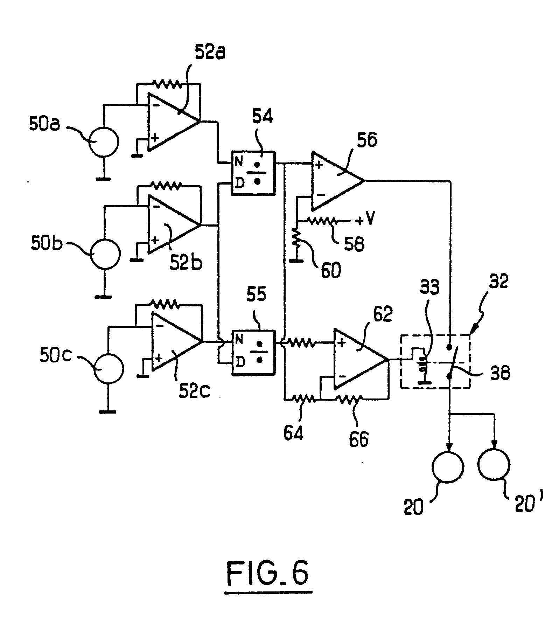

. La Figure 6 est un schéma électrique d'une variante de réalisation du dispositif de l'invention.

Avec référence aux Figures 1 et 2, le dispositif correcteur automatique selon l'invention est intégré à un projecteur d'un véhicule automobile. Il comprend, en ce qui concerne sa partie optique, un capteur d'éclairement constitué d'un objectif, qui peut être une simple lentille convergente 10, et du réflecteur pivotant 12 du projecteur. La lentille est solidaire du réflecteur en mouvement de pivotement.

Sur le réflecteur 12 sont montées trois cellules photo-électriques, dont les surfaces sensibles sont indiquées en a, b et c. Dans l'exemple de réalisation qui va suivre, ces cellules sont de type passif, c'est-à-dire qu'elles sont constituées par des éléments photosensibles dont la résistance électrique varie de façon inversement proportionnelle à l'intensité lumineuse reçue (photorésistances). Bien entendu, on pourra également faire appel à des cellules fonctionnant selon un principe actif, c'est-à-dire engendrant un courant ou une tension électrique proportionnel à l'éclairement reçu.

Les cellules a, c, b sont disposées sur le réflecteur de manière à coïncider respectivement avec les images que la lentille 10 forme sur le réflecteur de trois points A, C et B de la route, le point A étant de préférence situé au point de rencontre de la coupure du faisceau code (représentée par la ligne 13) avec la route, lorsque l'assiette du véhicule est normale, le point B étant le plus rapproché du projecteur, et le point C étant à une distance intermédiaire.

Les points A, C, B de la Figure 1 sont en réalité des régions en forme de bandes transversales étroites de route, de largeurs égales à celle de la voie suivie par le véhicule. De même, comme le montre la Figure 2, les cellules photo-électriques sont en réalité en forme de bandes horizontales, de largeurs égales à celles des images des régions A, C et B de la voie. Les cellules b, c, a ont donc des longueurs décroissantes reproduisant la perspective de la route. Pour simplifier la suite de la description, on continuera à parler des "points" A, C et B.

Sur la Figure 1, on a représenté un système d'axes qui permet de repérer angulairement la position des points A, B, C, ainsi que l'orientation de l'assiette de la voiture et que l'orientation du projecteur. Plus précisément, on désigne par:

. OY l'horizontale du lieu, qui est fixe dans l'espace et le temps;

. OX un axe qui est lié à la voiture et qui, lorsque le projecteur est correctement réglé, est horizontal et confondu avec OY. Sur la Figure 1, on a supposé que l'assiette normale de la voiture a changé. La variation d'assiette est représenté par l'angle $(OY, OX) = \theta$;

. OZ un axe lié au projecteur. Il peut être constitué par exemple par son axe optique et sa position est repérée par l'angle $(OZ, OX) = \varphi$.

La position des points A, B et C est repérée respectivement par les angles $\alpha$, $\beta$ et $\gamma$ formés par les axes OA, OB et OC avec l'axe OZ.

Lorsque, par suite d'une variation d'assiette, le faisceau lumineux est rabattu de A en A', le but de l'invention est de faire pivoter le réflecteur, donc son axe optique, d'un angle tel que cette variation d'assiette soit intégralement compensée, soit dans le présent exemple dans le sens inverse des aiguilles d'une montre sur la Figure 1.

Conformément à l'invention, l'orientation des projecteurs du véhicule est commandée par des actuateurs, eux-mêmes pilotés par des moyens de traitement de signal capables de comparer les rapports des éclairements détectés par les cellules photo-électriques auxdits points A, B, C, comme on l'expliquera par la suite.

Les moyens de traitement peuvent être de tout type connu, par exemple à microprocesseur. A titre d'exemple, on en décrira un mode de réalisation utilisant un circuit électrique, mais il va de soi que cet exemple n'est pas limitatif et que le technicien pourra imaginer d'autres formes de réalisation.

Avec référence à la Figure 3, on va décrite tout d'abord une forme de réalisation simplifiée du circuit électrique, adaptée au cas où le dispositif correcteur ne comporte que les cellules photo-électriques a et b.

Le circuit comprend alors un pont de Wheatstone dont deux branches adjacentes sont constituées par les résistances variables $r_a$, $r_b$ des cellules a et b et les deux autres branches sont constituées par deux résistances fixes 14, 16. Les cellules a et b et les résistances 14 et 16 sont choisies de telle manière que le pont soit équilibré lorsque le projecteur est correctement réglé. En cas de déséquilibre du pont, dû à la variation du rapport entre les résistances des cellules a et b, par suite d'un changement d'assiette, une tension électrique apparaît aux bornes de la diagonale de sortie MN du pont. Cette tension est amplifiée par un amplificateur 18, dont le signal de sortie est appliqué à deux actuateurs 20 et 20' associés aux projecteurs P et P'. Selon le signe de la tension existant aux bornes MN, les actuateurs relèveront ou abaisseront les faisceaux desdits projecteurs en faisant pivoter leurs réflecteurs dans le sens approprié.

Les actuateurs 20 et 20' peuvent être pas à pas. Dans le cas contraire, l'actuateur 20' du second projecteur pourra être commandé également par un comparateur des positions d'un projecteur par rapport à l'autre. Des comparateurs de position sont bien connus dans la technique. On va en décrire un exemple de réalisation non limitatif en référence à la Figure 4.

Ce comparateur comprend deux potentiomètres 22, 24 montés en pont de Wheatstone. Les curseurs 26, 28 des potentiomètres sont rigidement solidaires en rotation avec les réflecteurs des projecteurs P, P' et occupent donc une position qui dépend de l'orientation angulaire de ces derniers. Les tensions présentes sur les curseurs sont appliquées aux bornes d'entrée d'un amplificateur 30 dont les bornes de sortie sont reliées à l'actuateur 20, du second projecteur. On notera que l'actuateur 20 de l'autre projecteur n'est commandé que par le montage de la Figure 3. On réalise ainsi un asservissement de l'orientation du second projecteur P' par rapport à celle du premier.

Cependant, comme on l'a expliqué dans le préambule de la description, le circuit doit être capable de mesurer non seulement le rapport des luminances aux points A et B, de manière à éliminer l'influence du coefficient de réflexion de la route et des variations d'intensité des lampes des projecteurs, mais également le rapport des luminances aux points C et B. Ces deux rapports sont liés par une relation tant que le fonctionnement est normal, c'est-à-dire tant qu'il n'y a pas d'obstacle en A. Dans ces conditions, le circuit doit élaborer un signal électrique qui est fonction de la variation d'angle d'assiette, ledit signal commandant l'actuateur de manière à faire tourner le réflecteur associé d'un angle de correction dans le sens voulu pour ramener le faisceau lumineux dans la direction initiale et réaliser ainsi l'asservissement en éclairement d'orientation constante.

Si, au contraire, la relation sus-mentionnée n'est pas vérifiée par suite de l'apparition d'un obstacle en A, le calculateur doit être conçu pour ne pas commander l'actuateur.

Avec référence à la Figure 5, on va décrire une forme de réalisation d'un circuit électrique capable de comparer les rapports sus-mentionnés dans le but de réaliser cette fonction, étant entendu que le technicien du domaine pourra facilement concevoir d'autres formes de réalisation d'un circuit ayant la même fonction.

Le circuit électrique de la Figure 5 comprend un pont de Wheatstone identique à celui de la Figure 3. Le point M est relié par l'intermédiaire du bobinage 33 d'un relais 32 et d'une diode 34 en série, à un point Q auquel sont reliées les extrémités de la résistance $r_c$ représentant la cellule photo-électrique c et d'une résistance $r_b'$. Les autres extrémités U et V des résistances $r_c$ et 36 sont reliées aux bornes de la diagonale d'alimentation du pont de Wheatstone. La résistance $r_b'$ est agencée pour se comporter d'une manière sensiblement identique à la résistance $r_b$ de la seconde cellule. Elle pourra par exemple consister en une quatrième cellule (non représentée) disposée tout à fait au voisinage de la cellule b ou bien, si l'on considère les variations de $r_b$ comme négligeables, en une résistance fixe égale à la valeur moyenne de $r_b$.

La diode 34 est montée de manière à n'autoriser le passage du courant que de M vers Q. Par ailleurs, le relais 32 est choisi de manière à avoir le comportement suivant: lorsqu'un courant électrique tend à circuler dans le sens QM, la diode l'en empêche et l'interrupteur 36 du relais reste fermé; lorsqu'un courant circule dans le sens MQ, le relais est conçu pour que l'ouverture de son interrupteur 36 n'ait pas lieu tant que ce courant reste inférieur à une valeur de seuil; par contre, dès que le courant dépasse cette valeur de seuil, la force engendrée devient suffisante pour décoller la lame mobile de l'interrupteur 38, et provoquer l'ouverture de ce dernier.

L'interrupteur 38 est monté en série dans le circuit d'alimentation des actuateurs 20 et 20', montés en parallèle à partir de la sortie de l'amplificateur 16. De même que dans l'exemple précédent, les entrées dudit amplificateur sont reliées aux points M et N de la diagonale de sortie du pont de Wheatstone.

Les résistances $r_a$, $r_b$ et $r_c$ des cellules $\underline{a}$, $\underline{b}$ et $\underline{c}$ sont choisies de manière à ce que, pour une orientation correcte des projecteurs, l'on ait $r_a = r_c$ et $r_a = n.r_b$, avec $n > 1$ et par exemple $n = 2$. Les résistances 14 et 16 sont choisies de telle sorte que le pont de Wheatstone soit équilibré.

Le circuit électrique, présente un certain nombre de comportements en fonction des états d'éclairement des cellules photo-électriques. Ces états sont les suivants:

1) Lorsque le réglage de l'orientation des projecteurs est correct et que le véhicule est stable, les éclairements des cellules $\underline{a}$, $\underline{b}$ et $\underline{c}$ restent constants, avec $\frac{r_a}{r_b} = n$. Le pont de Wheatstone est donc équilibré et aucune commande n'est appliquée aux actuateurs 20 et 20'.

2) Lorsque le faisceau des projecteurs est relevé, par exemple par suite de l'accélération du véhicule, les directions de détection lumineuse sont également relevées, avec un éloignement des points A, B et C. Cependant, la sensibilité de la détection aux variations d'assiette étant croissante dans le sens B, C, A, comme on l'a dit plus haut et comme on le démontrera plus loin par calcul, l'éclairement des cellules va diminuer proportionnellement davantage dans le sens $\underline{b}$, $\underline{c}$, $\underline{a}$, et donc les valeurs des résistances vont augmenter proportionnellement davantage dans le sens $r_b$, $r_c$, $r_a$, avec en conséquence $\frac{r_a}{r_c} > 1$ et $\frac{r_a}{r_b} > n$. Un courant tend alors à circuler dans le sens de Q vers M, mais la diode 34 s'oppose à sa circulation, et l'interrupteur 38 reste fermé. La tension qui naît aux bornes M,N du pont du fait du déséquilibre entre $r_a$ et $r_b$ provoque donc une action de correction par le biais de l'amplificateur 18 et des actuateurs 20 et 20', pour ramener le faisceau dans une orientation correcte telle que $\frac{r_a}{r_b} = n$ (avec incidemment $\frac{r_a}{r_c} = 1$)

3) Dans le cas où, au contraire, le faisceau des projecteurs est abaissé (par exemple lors d'une variation d'assiette due au freinage du véhicule), le phénomène inverse de celui décrit ci-dessus se produit, on obtient dans ce cas $\frac{r_a}{r_c} < 1$ et $\frac{r_a}{r_b} < n$. Un courant tend à circuler dans le sens de M vers Q, sans que la diode 34 ne s'y oppose, mais la valeur du courant de seuil indiqué plus haut lors de la description du relais 32 est choisie de telle sorte qu'elle soit toujours supérieure à la valeur de ce courant. L'ouverture de l'interrupteur 38 n'est donc pas provoquée, et le signal de commande à la sortie de l'amplificateur 18 peut agir sur les actuateurs 20 et 20' pour corriger l'orientation des projecteurs. On peut démontrer que le courant de seuil sus-mentionné peut être associé à une variation de luminance des régions A, B et C telle que l'on ait $r_a < r_c$, soit $\frac{r_a}{r_c} = \frac{1}{k}$, avec $k > 1$.

On peut donc écrire la relation $\frac{1}{k} < \frac{r_a}{r_c} < 1$.

4) Ce dernier cas correspond à l'apparition d'un obstacle au point A, quelle que soit, à cet instant, la variation d'assiette du véhicule. L'éclairement de la cellule $\underline{a}$ augmente alors dans des proportions importantes, avec une brusque diminution de $r_a$. Quelles que soient, à cet instant, les variations de $r_b$ et de $r_c$, de toute manière d'une amplitude beaucoup plus faible, on obtient alors $\frac{r_a}{r_c} < \frac{1}{k}$. Le courant de seuil dans le sens MQ est cette fois-ci dépassé, ce qui provoque l'ouverture de l'interrupteur 38 du relais 32. Ainsi, le signal de commande qui tendrait à redresser fortement, mais inutilement, l'orientation des faisceaux (du fait que $\frac{r_a}{r_b}$ devient incidemment inférieur à n) n'est pas appliqué aux actuateurs 20 et 20'.

Les quatre cas de figure ci-dessus sont résumés dans le Tableau ci-après.

TABLEAU

| Variation d'assiette | Eclairement cellules | | | $r_a$ | $r_b$ | $r_c$ | $\dfrac{r_a}{r_c}$ | $\dfrac{r_a}{r_b}$ | Comportement |
|---|---|---|---|---|---|---|---|---|---|
| | a | b | c | | | | | | |
| Nulle | → | → | → | → | → | → | $=1$ | n | L'orientation des projecteurs des correcte. La tension appliquée à l'entrée de l'amplificateur est nulle et ladite orientation n'est pas modifiée |
| Vers le haut | ↘ | ↘ | ↘ | ↗ | ↗ | ↗ | $>1$ | $>n$ | Un courant tend à circuler de Q vers M mais la diode l'en empêche. L'interrupteur reste fermé et l'orientation des projecteurs est rabattue pour compenser la variation d'assiette |
| Vers le bas | ↗ | ↗ | ↗ | ↘ | ↘ | ↘ | $<1$ et $> \dfrac{1}{k}$ | $<n$ | Un courant circule de M vers Q, mais avec une intensité trop faible pour ouvrir l'interrupteur. L'orientation des projecteurs est redressée pour compenser la variation d'assiette |
| Quelconque mais anomalie lumineuse en A | ↗↗ | NS | NS | ↘↘ | NS | NS | $< \dfrac{1}{k}$ | $<n$ | Un courant élevé circule de M vers Q, et provoque l'ouverture de l'interrupteur 38 du relais. La commande des actuateurs, qui tendrait à redresser fortement les projecteurs, est donc inhibée |

↗ : accroissement      → : constant

↘ : diminution      NS : non significatif

On illustrera à présent l'invention par le calcul et l'exemple numérique donnés ci-après.

On calculera tout d'abord la sensibilité $\frac{dR_A}{R_A}$ du correcteur au point A, $R_A$ étant le rapport $\frac{E_B}{E_A}$ des éclairements verticaux en B et A, et $dR_A$ étant la différentielle de $R_A$ par rapport à l'angle d'assiette $\theta$.

On sait que:

$$E_A = I_A \frac{h^2}{\sin^2(\alpha + \theta + \varphi)}$$

$I_A$ étant l'intensité lumineuse en A et h étant la hauteur du projecteur par rapport au sol.

De même $E_B = I_B \frac{h^2}{\sin^2(\beta + \theta + \varphi)}$

$I_B$ étant l'intensité lumineuse en B.

Les éclairements sur les cellules correspondantes $\underline{a}$ et $\underline{b}$ sont:

$$1.I_A \cdot \frac{h}{\sin^2(\alpha + \theta + \varphi)} \text{ et } m.I_B \frac{h}{\sin^2(\beta + \theta + \varphi)}$$

l et m étant des constantes.

d'où $R_A = \frac{m.I_B.\sin^2(\alpha + \theta + \varphi)}{l.I_A.\sin^2(\beta + \theta + \varphi)}$

un calcul simple donne:

$$\left(\frac{dR_A}{R_A}\right) = 2 \frac{\sin(\beta - \alpha)}{\sin(\beta + \theta + \varphi)\sin(\alpha + \theta + \varphi)} d\theta$$

A titre d'exemple numérique, les angles $\alpha$, $\beta$, $\theta$ et $\varphi$ étant très petits, on peut confondre leur sinus et leur tangente avec leur mesure en radians.

D étant la projection de 0 sur le sol, on supposera que:

DA = 37,5 m
DB = 7,5 m
h = 0,75 m

Il en résulte que $\alpha = 0,02$ rd et $\beta = 0,1$ rd. Quant à $\theta$, on peut le négliger devant $\alpha$ et $\beta$.

On suppose d'autre part que $d\theta = 0,01$ rd, ce qui équivaut à un rabattement de l'assiette de $\frac{1°}{2}$ environ.

L'application numérique donne:

$$\left(\frac{dR_A}{R_A}\right) = \frac{12}{15}$$

De la même manière on calcule $\left(\frac{dR_C}{R_C}\right)$ avec $RC = \frac{E_B}{E_C}$

$$\left(\frac{dR_C}{R_C}\right) = 2 \frac{\sin(\beta - \gamma)}{\sin(\beta + \theta + \varphi)\sin(\gamma + \theta + \varphi)} d\theta$$

En prenant DC = 25 m et donc $\gamma = 0,03$ rd, on trouve pour la même variation d'assiette $d\theta = 0,01$ rd,

$$\left(\frac{dR_C}{R_C}\right) = \frac{7}{15}$$

On constate bien que la sensibilité de la détection au point A est supérieure à celle au point C, ou en d'autres termes, que la variation d'éclairement résultant d'une même variation $d\theta$ est plus grande pour un point éloigné que pour un point rapproché.

Ce calcul justifie donc le choix du point B rapproché comme point de référence, puisque la sensibilité en ce point peut être considérée comme étant relativément constante.

On constate que les sensibilités en A et C sont liées par la relation:

$$\left(\frac{dR_A}{R_A}\right) = \frac{12}{7} \frac{dR_C}{R_C}$$

Cette relation, à caractère général, et indépendante des moyens de traitement utilisés, montre bien qu'il est possible de déterminer un coefficient de seuil, en l'occurence supérieur $\frac{12}{7}$ et par exemple égal à 2, permettant de distinguer sans ambiguïté le cas où aucun obstacle ne se présente au point A et le cas où cet obstacle existe. Ainsi, les moyens de traitement pourront être agencés pour déterminer le coefficient qui lie les sensibilités $\frac{dR_A}{R_A}$ et $\frac{dR_C}{R_C}$ et pour comparer celui-ci avec la valeur de seuil. Lorsque le seuil n'est pas atteint, la commande correctrice des actuateurs est autorisée. Inversement, lorsque le seuil est dépassé, cela démontre l'existence d'une variation d'intensité anormale en A, et la commande d'orientation des projecteurs est inhibée.

Dans le mode de réalisation de l'invention décrit plus haut, la distinction entre ces deux cas s'effectue au niveau de l'intensité du courant créé dans la branche MQ par rapport à la valeur du courant nécessaire pour ouvrir l'interrupteur 38 du relais 32, correspondant à $\frac{i_1}{i_C} = \frac{1}{k}$.

Sur la Figure 6 est représenté un schéma de circuit qui constitue une variante "active" du circuit passif représenté sur la Figure 5.

En référence à la Figure 6, les cellules photo-électriques correspondant aux régions A et B de la route sont respectivement indiquées en 50a et 50b. Ces cellules sont de type actif et par exemple constituées d'une surface semi-conductrice appropriée, pour engendrer un courant électrique proportionnel à l'intensité de l'éclairement reçu. Ces courants sont appliqués à l'entrée d'amplificateurs courant/tension 52a et 52b. Les tensions de sortie de ces amplificateurs sont respectivement appliquées aux entrées N et D d'un circuit diviseur 54 agencé pour effectuer la division analogique de la valeur de la tension présente sur la borne N par celle de la tension présente sur la borne D. La sortie du diviseur 54 est reliée à l'entrée non inverseuse d'un amplificateur opérationnel 56 monté en comparateur. Un pont diviseur de tension constitué par deux résistances 58 et 60 est destiné à appliquer une tension de référence sur l'entrée inverseuse de l'amplificateur 56. La sortie de l'amplificateur 56 est destinée à commander les actuateurs 20 et 20' pour changer l'orientation des projecteurs associés, ou simplement de leurs réflecteurs.

Cette partie du circuit, d'une façon analogue au circuit à pont de Wheatstone de la Figure 3, permet d'engendrer un signal de commande dès que la sortie du diviseur 54, soit le rapport entre les tensions de sortie des amplificateurs 52a et 52b, qui est égal au rapport des éclairements reçus par les cellules 50a, 50b associées, diffère d'une valeur de référence fournie par le pont diviseur 58, 60. Le signe du signal de sortie de l'amplificateur 56 varie selon que ce rapport est supérieur ou inférieur à ladite valeur de référence, de sorte que les actuateurs pourront, dans les conditions expliquées plus loin, ramener les projecteurs dans la direction appropriée en fonction du sens de variation de l'assiette du véhicule.

Le circuit comprend en outre une troisième cellule photo-électrique 50c, analogue aux premières, dont la sortie est reliée à l'entrée d'un amplificateur 52c. Un circuit diviseur 55 reçoit sur son entrée N la sortie de l'amplificateur 52c, et sur son entrée D la sortie de l'amplificateur 52b, pour fournir en sortie, après division analogique, une tension représentative du rapport entre les éclairements des cellules 50c et 50b. Un amplificateur opérationnel 62 reçoit sur son entrée non-inverseuse la sortie du diviseur 55, et sur son entrée inverseuse, par l'intermédiaire d'une résistance 64, la sortie du diviseur 54. Une autre résistance 66 est montée entre l'entrée inverseuse et la sortie de l'amplificateur 62. Ladite sortie est également reliée au bobinage 33 d'un relais indiqué dans son ensemble en 32, qui comporte également un interrupteur 38 monté en série entre la sortie de l'amplificateur 56 et les actuateurs 20 et 20'.

Cette seconde partie a pour objet de comparer le rapport entre les éclairements des cellules 50a et 50b, fourni par le diviseur 54, avec le rapport des éclairements des cellules 50c et 50b, fourni par le diviseur 55. Plus précisément, si l'on attribue les valeurs $R_{64}$ et $R_{66}$ aux résistances 64 et 66, et si l'on considère que les tensions de sortie des diviseurs 54 et 55 sont respectivement proportionnelles aux rapports $\frac{E_a}{E_b}$ et $\frac{E_c}{E_b}$, $E_a$, $E_b$ et $E_c$ désignant les éclairements respectifs des cellules 50a, 50b et 50c, l'on démontre facilement que la tension de sortie de l'amplificateur 62 change de signe pour:

$$\frac{E_c}{E_b} = \frac{E_a}{E_b}\left(\frac{R_{66}}{R_{64} + R_{66}}\right)$$

$$\text{soit } \frac{E_a}{E_c} = \frac{R_{64} + R_{66}}{R_{66}}$$

L'on en déduit que, lors de la présence d'un obstacle lumineux dans la direction de visée de la cellule 50a, l'accroissement important de $E_a$ provoque le changement de signe de la tension de sortie de l'amplificateur 62, le relais 32 étant conçu pour provoquer alors l'ouverture de l'interrupteur 38.

Bien entendu, l'invention n'est nullement limitée aux modes de réalisation décrits, mais inclut toute variante qui serait couverte par la portée des revendications annexées. En particulier, on pourra prévoir, entre les cellules photo-électriques et les actuateurs, tout moyen de traitement, tel qu'un calculateur à microprocesseur, permettant de prendre en considération toute situation d'éclairement particulier des cellules.

## Revendications

1. Dispositif pour la correction automatique de l'orientation d'au moins un projecteur de véhicule, lors des variations d'assiette dudit véhicule, caractérisé en ce qu'il comprend:

. un capteur d'éclairement (a, b, c; 50a, 50b, 50c) intégré au projecteur du véhicule et solidaire en mouvement de ce dernier, le capteur étant agencé pour détecter la luminance de la route selon au moins une direction faisant un angle prédéterminé avec l'horizontale, en une région (A, B, C) de la route située dans le champ d'éclairement du projecteur, et pour engendrer un signal représentatif de ladite luminance,

. un actuateur (20) apte à faire varier l'inclinaison de l'ensemble projecteur-capteur par rapport au véhicule, et

. des moyens de traitement aptes à élaborer un signal de commande de l'actuateur (20) à partir du signal engendré par le capteur, de manière à asservir ladite région de la route en luminance constante.

2. Dispositif selon la revendication 1, caractérisé en ce que le capteur d'éclairement comprend une lentille convergente (10) et au moins une cellule photo-électrique (a, b, c; 50a, 50b, 50c) disposée dans le plan focal image de ladite lentille au point image de ladite région (A, B, C) de la route.

3. Dispositif selon la revendication 2, caractérisé en ce que le capteur comprend deux cellules photo-électriques (a, b; 50a, 50b) respectivement situées aux points images de deux régions (A, B) de la route respectivement éloignée et proche du véhicule.

4. Dispositif selon la revendication 3, caractérisé en ce que le capteur comprend une troisième cellule photo-électrique (c; 50c) située au point image d'une région (C) de la route située entre lesdites régions proche et éloignée.

5. Dispositif selon la revendication 4, caractérisé en ce que les moyens de traitement sont agencés pour inhiber la commande de l'actuateur (20) lorsque le rapport entre les éclairements des première et troisième cellules (a, c; 50a, 50c) est supérieur à une valeur de seuil.

6. Dispositif selon la revendication 5, caractérisé en ce que les cellules photo-électriques sont du type photo-résistif, et en ce que les moyens de traitement comprennent un pont de Wheatstone dont deux branches adjacentes sont constituées par les deux premières cellules (a, b), et dont les deux autres branches sont constituées par des résistances fixes (14, 16) choisies de telle sorte que, lorsque le projecteur est dans son orientation correcte, le pont de Wheatstone soit équilibré, les moyens de traitement comprenant en outre un amplificateur (18) monté entre le pont de Wheatstone et l'actuateur (20).

7. Dispositif selon la revendication 6, caractérisé en ce que les moyens de traitement comprennent en outre un relais (32) dont le bobinage (33) est monté dans une branche traversée par un courant représentatif du rapport entre les résistances électriques ($r_a$, $r_c$) des première et troisième cellules (a, c), le relais étant agencé pour couper l'alimentation de l'actuateur lorsque ledit courant dépasse une valeur de seuil.

8. Dispositif selon la revendication 5, caractérisé en ce que les cellules photo-électriques (50a, 50b, 50c) sont du type actif, et en ce que les moyens de traitement comprennent un circuit diviseur (54) pour effectuer la division analogique entre les tensions fournies par les première et seconde cellules (50a, 50b), et un circuit comparateur (56) pour comparer la sortie du circuit diviseur avec une tension de référence, la sortie du circuit comparateur commandant l'actuateur (20).

9. Dispositif selon la revendication 8, caractérisé en ce que les moyens de traitement comprennent un second circuit diviseur (55) pour effectuer la division entre les tensions fournies par les seconde et troisième cellules (50b, 50c), et un second circuit comparateur (62) pour effectuer la comparaison entre les tensions fournies par les premier et second circuits diviseurs, la sortie du second circuit comparateur commandant un relais (32) apte à sélectivement ouvrir et fermer le circuit entre le premier comparateur et l'actuateur.

10. Dispositif selon l'une quelconque des revendications 4 à 9, caractérisé en ce que les trois cellules photo-électriques sont en forme de bandes allongées horizontales et parallèles, coincidant avec les images respectives de trois bandes transversales de la route définissant lesdites régions, de largeurs égales à celle de la voie suivie par le véhicule.

11. Dispositif selon l'une quelconque des revendications 1 à 10, caractérisé en ce que les moyens .de traitement commandent également un actuateur apte à faire varier l'inclinaison de l'autre projecteur du véhicule.

12. Dispositif selon la revendication 11, caractérisé en ce que les actuateurs (20, 20') sont des moteurs pas-à-pas.

13. Dispositif selon la revendication 11, caractérisé en ce que les actuateurs (20, 20') sont des moteurs à courant continu, et en ce que les moyens de traitement comprennent également des moyens d'asservissement des deux projecteurs en inclinaison constante.

14. Dispositif selon la revendication 13, caractérisé en ce que les moyens d'asservissement comprennent des potentiomètres (22, 24) montés en pont de Wheatstone, dont les curseurs (26, 28) sont mécaniquement solidaires en rotation avec les projecteurs.

15. Dispositif selon l'une quelconque des revendications 1 à 14, caractérisé en ce que le ou les actuateurs sont aptes à provoquer un changement d'inclinaison du réflecteur seulement du projecteur associé.


## Patentansprüche

1. Vorrichtung zum automatischen Korrigieren der Ausrichtung wenigstens eines Scheinwerfers eines Fahrzeuges bei Lageänderungen des Fahrzeuges,
gekennzeichnet durch
- einen Meßfühler (a, b, c; 50a, 50b, 50c) für die Beleuchtungsstärke, der in den Scheinwerfer des Fahrzeuges integriert und mit diesem bewegungsfest verbunden und so ausgebildet ist, daß er die Leuchtdichte der Fahrbahn in wenigstens einer Richtung, die mit der Waagerechten einen im voraus festgelegten Winkel bildet, in einem im Beleuchtungsfeld des Scheinwerfers gelegenen Bereich (A, B, C) der Fahrbahn erfaßt und ein für diese Leuchtdichte repräsentatives Signal erzeugt,
- eine Betätigungsvorrichtung (20), welche die Meigung der Baugruppe Scheinwerfer/Menfühler gegenüber dem Fahrzeug zu ändern vermag, und
- Verarbeitungseinrichtungen zum Ableiten eines Befehlssignals für die Betätigungsvorrichtung (20) von dem vom Meßfühler erzeugten Signal, derart, daß dieser Bereich der Fahrbahn mit einer konstanten Leuchtdichte bedienbar ist.

2. Vorrichtung nach Anspruch 1,
dadurch gekennzeichnet, daß
der Meßfühler für die Beleuchtungsstärke eine Sammellinse (10) und wenigstens eine fotoelektrische Zelle (a, b, c; 50a, 50b, 50c) umfaßt, die in der bildseitigen Brennpunktsebene der Linse im Bildpunkt des genannten Fahrbahnbereiches (A, B, C) angeordnet ist.

3. Vorrichtung nach Anspruch 2,
dadurch gekennzeichnet, daß
der Meßfühler zwei fotoelektrische Zellen (a, b; 50a, 50b) umfaßt, die in den zugehörigen Bildpunkten eines fahrzeugfernen und eines fahrzeugnahen Fahrbahnbereiches (A, B) angeordnet sind.

4. Vorrichtung nach Anspruch 3,
dadurch gekennzeichnet, daß
der Meßfühler eine dritte fotoelektrische Zelle (c; 50c) umfaßt, die im Bildpunkt eines zwischen den fahrzeugnahen und fahrzeugfernen Bereichen gelegenen Fahrbahnbereiches (C) angeordnet ist.

5. Vorrichtung nach Anspruch 4,
dadurch gekennzeichnet, daß
die Verarbeitungseinrichtungen so ausgebildet sind, daß sie die Betätigung der Betätigungsvorrichtung (20) verhindern, wenn das Verhältnis zwischen den Leuchtdichten der ersten und der dritten Zelle (a, c; 50a, 50c) einen Schwellenwert übersteigt.

6. Vorrichtung nach Anspruch 5,
dadurch gekennzeichnet, daß
- die fotoelektrischen Zellen wie Fotowiderstände wirken, und
- die Verarbeitungseinrichtungen eine Wheatstone-Brückenschaltung umfassen, von der zwei benachbarte Zweige von den beiden erstgenannten Zellen (a, b) und die beiden anderen Zweige von festen Widerständen (14, 16) gebildet sind, welche so gewählt sind, daß die Wheatstone-Brückenschaltung bei ordnungsgemäßer Ausrichtung des Scheinwerfers abgeglichen ist, wobei die Verarbeitungseinrichtungen ferner einen zwischen die Wheatstone-Brückenschaltung und die Betätigungsvorrichtung (20) zwischengeschalteten Verstärker (18) umfassen.

7. Vorrichtung nach Anspruch 6,
dadurch gekennzeichnet, daß
die Verarbeitungseinrichtungen ferner ein Relais (32) umfassen, dessen Wicklung (33) in einen Zweig eingeschaltet ist, der von einem für das Verhältnis zwischen den elektrischen Widerständen ($r_a$, $r_c$) der ersten und der dritten Zelle (a, c) repräsentativen Strom durchflossen wird, wobei das Relais so ausgebildet ist, daß es die Speisung der Betätigungsvorrichtung unterbricht, wenn der genannte Strom einen Schwellenwert übersteigt.

8. Vorrichtung nach Anspruch 5,
dadurch gekennzeichnet, daß
- die fotoelektrischen Zellen (50a, 50b, 50c) aktive Zellen sind, und
- die Verarbeitungseinrichtungen eine Teilerschaltung (54) zum analogen Teilen der von der ersten und der zweiten Zelle (50a, 50b) abgegebenen Spannungen und eine Vergleicherschaltung (50) zum Vergleichen des Ausgangs von der Teilerschaltung mit einer Bezugsspannung umfassen, wobei der Ausgang der Vergleicherschaltung die Betätigungsvorrichtung (20) betätigt.

9. Vorrichtung nach Anspruch 8,
dadurch gekennzeichnet, daß
die Verarbeitungseinrichtungen eine zweite Teilerschaltung (55) zum Teilen der von der zweiten und der dritten Zelle (50b, 50c) abgegebenen Spannungen und eine zweite Vergleicherschaltung (62) zum Vergleichen der von der ersten und der zweiten Teilerschaltung abgegebenen Spannungen umfassen, wobei der Ausgang der zweiten Vergleicherschaltung ein Relais (32) betätigt, das den Stromkreis zwischen der ersten Vergleicherschaltung und der Betätigungsvorrichtung wahlweise zu unterbrechen und zu schließen vermag.

10. Vorrichtung nach einem der Ansprüche 4 bis 9,
dadurch gekennzeichnet, daß
die drei fotoelektrischen Zellen von der Gestalt waagerechter und paralleler Streifen von überwiegender Längserstreckung sind, die mit den zugehörigen Bildern von drei die genannten Bereiche definierenden quergerichteten Streifen der Fahrbahn von gleicher Breite wie die vom Fahrzeug befahrene Bahn zusammenfallen.

11. Vorrichtung nach einem der Ansprüche 1 bis 10,
dadurch gekennzeichnet, daß
die Verarbeitungseinrichtungen auch eine Betätigungsvorrichtung betätigen, welche die Neigung des anderen Scheinwerfers des Fahrzeuges zu ändern vermag.

12. Vorrichtung nach Anspruch 11,
dadurch gekennzeichnet, daß
die Betätigungsvorrichtungen (20, 20') Schrittmotoren sind.

13. Vorrichtung nach Anspruch 11,
dadurch gekennzeichnet, daß
- die Betätigungsvorrichtungen (20, 20') Gleichstrommotoren sind, und
- die Verarbeitungseinrichtungen auch Einrichtungen zum Regeln der beiden Scheinwerfer auf eine konstante Neigung umfassen.

14. Vorrichtung nach Anspruch 13,
dadurch gekennzeichnet, daß

11

# 0 186 571

die Regeleinrichtungen zu einer Wheatstone-Brückenschaltung miteinander verbundene Potentiometer (22, 24) umfassen, deren Schleifer (26, 28) mit den Scheinwerfern mechanisch drehfest verbunden sind.

15. Vorrichtung nach einem der Ansprüche 1 bis 14,

dadurch gekennzeichnet, daß

die Betätigungsvorrichtung(en) eine Meigungsänderung nur des Reflektors des zugehörigen Scheinwerfers hervorzurufen vermag/vermögen.

## Claims

1. Apparatus for automatic correction of the orientation of at least one vehicle headlamp upon variations in attitude of said vehicle, characterised in that it comprises:
- a lighting sensor (a, b, c; 50a, 50b, 50c) which is integrated into the headlamp of the vehicle and which is fixed for movement therewith, the sensor being arranged to detect the brightness of the road in at least one direction which is at a predeteimined angle to the horizontal, in a region (A, B, C) of the road which is in the field of lighting of the headlamp, and to produce a signal which is representative of said brightness,
- an actuator (20) capable of varying the inclination of the headlamp sensor assembly with respect to the vehicle, and
- processing means capable of producing a signal for servo-controlling the actuator (20) on the basis of the signal produced by the sensor so as to provide for constant brightness of said region of the road.

2. Apparatus according to claim 1 characterised in that the lighting sensor comprises a converging lens (10) and at least one photoelectric cell (a, b, c; 50a, 50b, 50c) which is diposed in the image focal plane of said lens at the image point of said region (A, B, C) of the road.

3. Apparatus according to claim 2 characterised in that the sensor comprises two photoelectric cells (a, b; 50a, 50b) which are respectively disposed at the image points of two regions (A, B) of the road, which are respectively far away from and close to the vehicle.

4. Apparatus according to claim 3 characterised in that the sensor comprises a third photoelectric cell (c; 50c) disposed at the image point of a region (C) of the road which is between said far-away and close regions.

5. Apparatus according to claim 4 characterised in that the processing means are arranged to inhibit operation of the actuator (20) when the ratio between the levels of lighting on the first and third cells (a, c; 50a, 50c) is higher than a threshold value.

6. Apparatus according to claim 5 characterised in that the photoelectric cells are of photo-resistive type and that the processing formed by the first two cells (a, b) and in which the other two branches are formed by fixed resistors (14, 16) which are so selected that, when the headlamp is in its correct orientation, the Wheatstone bridge is balanced, the processing means further comprising an amplifier (18) between the Wheatstone bridge and the actuator (20).

7. Apparatus according to claim 6 characterised in that the processing means further comprise a relay (32) whose winding (33) is disposed in a branch through in which a current flows which is representative of the ratio between the electrical resistances ($r_a$, $r_c$) of the first and third cells (a, c), the relay being arranged to interrupt the feed to the actuator when said current exceeds a threshold value.

8. Apparatus according to claim 5 characterised in that the photoelectric cells (50a, 50b, 50c) are of the active type and that the processing means comprise a divider circuit (54) for effecting analog division between the voltages supplied by the first and second cells (50a, 50b) and a comparator circuit (56) for comparing the output of the divider circuit with a reference voltage, the output of the comparator circuit controlling the actuator (20).

9. Apparatus according to claim 8 characterised in that the processing means comprise a second divider circuit (55) for effecting division between the voltages supplied by the seccnd and third cells (50b, 50c) and a second comparator circuit (62) for producing a comparison between the voltages supplied by the first and second divider circuits, the output of the second comparator circuit controlling a relay (32) for selectively opening and closing the circuit between the first comp rator and the actuator.

10. Apparatus according to any one of claims 4 to 9 characterised in that the three photoelectric cells are in the form of elongate, horizontal and parallel strips which are coincident with the respective images of three transverse strips of the road defining said regions, of widths equal to that of the lane followed by the vehicle.

11. Apparatus according to any one of claims 1 to 10 characterised in that the processing means also control an actuator for varying the inclination of the other headlamp of the vehicle.

12. Apparatus according to claim 11 characterised in that the actuators (20, 20') are stepping motors.

13. Apparatus according to claim 11 characterised in that the actuators (20, 20') are direct current motors and that the processing means also comprise means for servo-controlling the two headlamps to provide for constant inclination thereof.

14. Apparatus according to claim 13 characterised in that the control means comprise potentiometers (22, 24) which are arranged in a Wheatstone bridge configuration and whose sliders (26, 28) are mechanically fixed with respect to the headlamps for rotation therewith.

15. Apparatus according to any one of claims 1 to 14 characterised in that the actuator or actuators is or are capable of producing a change in inclination of the reflector only of the associated headlamp.

12

FIG.1

FIG.2

FIG.3

FIG.4

FIG.5

## FIG.6